# FASCICULE DE BREVET EUROPEEN

(11) **EP 0 659 285 B1**
(45) Date de publication et mention de la délivrance du brevet: **17.09.1997**
(21) Numéro de dépôt: 93915990.1
(22) Date de dépôt: 09.07.1993
(51) Int. Cl.: G03B 27/58

(54) **ALIMENTATION D'UNE MACHINE POURVUE D'UNE TOURELLE SUPPORTANT DES MAGASINS AMOVIBLES DISTRIBUTEURS DE BANDE PAR UNE SOURCE EXTERNE**
ZUFUEHRVORRICHTUNG EINER MASCHINE, VERSEHEN MIT EINER SPINDEL MIT ABNEHMBAREN BANDABGABEKASSETTEN, DURCH EINE EXTERNE QUELLE
USE OF AN EXTERNAL SUPPLY FOR FEEDING A MACHINE PROVIDED WITH A TURRET SUPPORTING REMOVABLE STRIP-FEEDING HOPPERS

(43) Date de publication de la demande: 28.06.1995
(73) Titulaire: KODAK-PATHE, F-75594 Paris Cedex 12 (FR); EASTMAN KODAK COMPANY, Rochester, New York 14650-2201 (US)
(72) Inventeur: VASSOS, Alain, André, F-71102 Chalon-sur-Saône Cédex (FR); THIBERT, Daniel, Gérard, F-71102 Chalon-sur-Saône Cédex (FR)
(74) Mandataire: Buff, Michel
(86) Numéro de dépôt international: FR9300710
(87) Numéro de publication internationale: WO9502206

(56) Documents cités:
- DE-A- 2 540 610
- DE-A- 3 715 179

## Description

L'invention est relative à l'alimentation en bandes de machines et plus particulièrement à des machines possédant de multiples magasins d'alimentation disposés sur une tourelle afin de permettre le changement automatique de la bande de papier utilisée et issue de l'un des magasins. Plus particulièrement les bandes utilisées sont des produits photosensibles tel que du papier et la machine est une tireuse photographique.

Les tireuses photographiques utilisant des chargeurs sont bien connues. Toutefois, les chargeurs sont installés manuellement sur les machines et leur poids limite les longueurs de bandes disponibles dans de tels chargeurs. On a donc réalisé des chargeurs de grande capacité et que l'on ne peut pas déplacer manuellement. De tels chargeurs sont décrits par exemple dans WO 91/19222 et on utilise entre le chargeur et la machine une interface analogue à celle décrite dans WO 91/20016.

Il existe aussi sur le marché des tireuses photographiques à grand débit, par exemple la tireuse KODAK CLAS 35. Dans ce type de machine, l'alimentation en bande de papier photosensible est obtenue par l'intermédiaire de chargeurs. Les chargeurs sont disposés sur une tourelle de manière à pouvoir changer automatiquement le magasin utilisé en tant que débiteur de bande. Un poste de collure permet de raccorder la nouvelle bande à la bande déjà débitée en cours d'utilisation. Le fonctionnement de ces machines étant commandé par un calculateur on a pu facilement modifier le fonctionnement prévu pour tirer parti au maximum des possibilités de la machine. Il est avantageux de disposer sur la tourelle d'alimentation des chargeurs munis de bandes de papier photosensible de qualité différente, par exemple mat ou brillant ou présentant des grades différents. Le calculateur gère automatiquement l'alimentation des bandes de manière à adapter le type ou la qualité de la bande à la commande à réaliser. Pour ce faire on coupe la bande en cours d'alimentation, on fait tourner la tourelle de manière à présenter une autre bande au poste d'alimentation, on raboute la bande de papier présentant la nouvelle qualité, et l'on débite la longueur de bande voulue. Cette série d'opérations est répétée à chaque fois que l'on a besoin de modifier la qualité du papier pour réaliser les tirages commandés.

On a remarqué qu'on utilise généralement de grandes longueurs de bandes de papier photosensible d'une qualité déterminée par rapport aux longueurs de bandes de papier photosensible présentant les autres qualités et qu'il serait souhaitable de pouvoir utiliser des chargeurs de grande capacité pour ce type de qualité.

L'invention a pour but de fournir une machine selon la rev. 1 qui résout les problèmes précédents sans perdre les avantages d'utilisation fournis par la machine.

Dans le mode de réalisation préféré suivant l'invention pour lequel on utilise des bandes photosensibles, le dispositif d'interfaçage de la machine comprend une première partie pour relier la source externe à la partie de trajectoire susceptible de tourner avec la tourelle lorsque cette partie de trajectoire est utilisée, ladite première partie pouvant basculer entre une première position de manière à fournir une trajectoire étanche à la lumière lors de l'utilisation et une seconde position située à l'extérieur du volume délimité par les magasins amovibles disposés sur la tourelle lorsque cette dernière tourne. Le dispositif d'interfaçage comprend un moyen pour renvoyer la bande située dans la partie susceptible de tourner avec la tourelle vers la source externe lorsqu'on met en oeuvre le moyen pour interrompre l'alimentation de la bande provenant de la source externe.

D'autres caractéristiques et avantages de l'invention apparaîtront à la lecture de la description qui suit faite en référence au dessin annexé dans lequel :
la Fig. 1 représente schématiquement une machine suivant l'invention utilisant une bande provenant d'une source externe ;
la Fig. 2 représente schématiquement une machine suivant l'invention utilisant une bande provenant d'un magasin amovible disposée sur une tourelle rotative.
la Fig. 3 représente une vue en perspective de la partie satellite du dispositif d'interfaçage ;
la Fig. 4 représente une coupe schématique de la partie satellite représentée à la Fig 3 ;
la Fig. 5 représente une vue en perspective de la partie principale du dispositif d'interfaçage utilisée dans l'invention ;
la Fig. 6 représente une vue en coupe de la partie principale représentée à la Fig. 5 ;
les Figs 7 et 8 représentent un détail en vue dessus et en vue de face d'un mécanisme compris dans la partie principale du dispositif d'interfaçage.

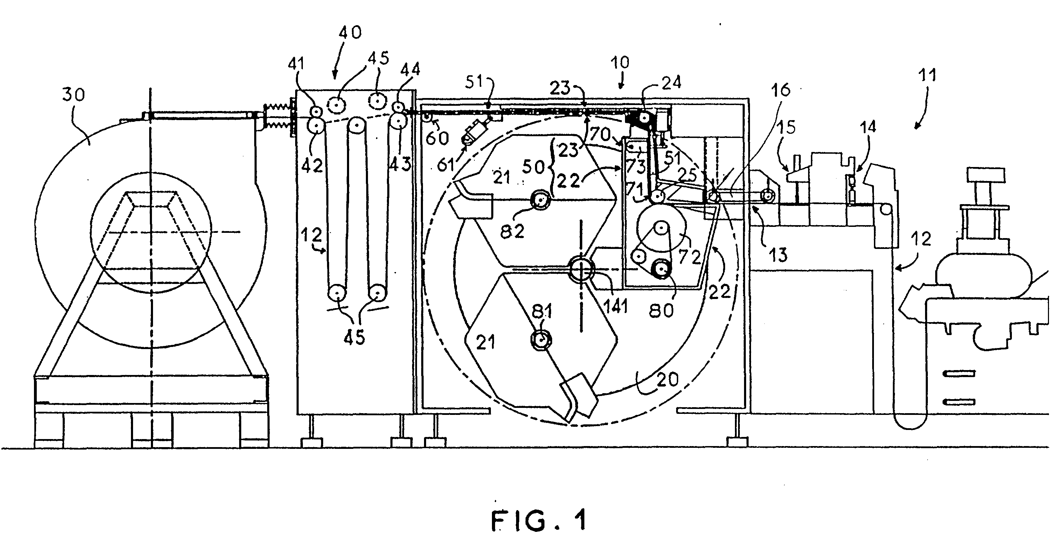

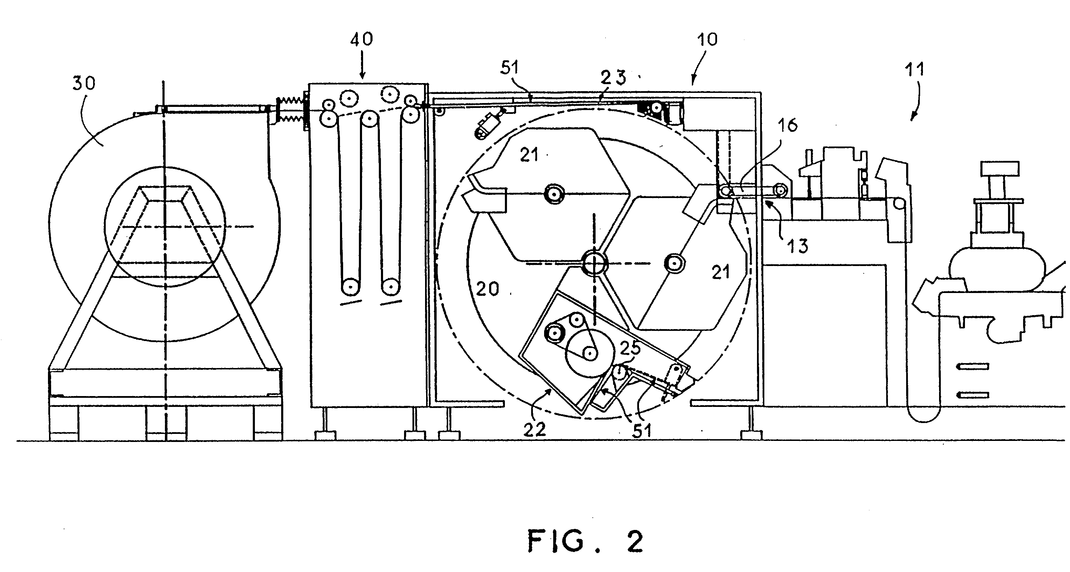

Les Figs 1 et 2 représentent schématiquement le dispositif d'alimentation 10 d'une machine 11 dont une partie seulement est esquissé.

Le dispositif d'alimentation fournit une bande 12 à une fente d'entrée 13 de la machine en vue de faire parvenir cette bande à un poste d'utilisation (non représenté). Dans le mode de réalisation représenté, la fente d'entrée 13 de la machine est disposée au voisinage d'un poste de collure 14 permettant de rabouter l'extrémité amont de la bande déjà débitée à l'extrémité aval de la nouvelle bande à utiliser. Avantageusement, le poste de collure 14 est pourvu d'une cisaille 15 permettant de couper les extrémités amont et aval des bandes.

Le dispositif d'alimentation connu de la machine comprend une tourelle 20 rotative sur laquelle on fixe de manière temporaire des magasins 21 contenant des bandes à fournir à la machine.

Dans un mode de fonctionnement particulier de la machine, les divers magasins 21 contiennent des bandes de qualité différentes. Le terme "qualité de la bande" fait référence à diverses caractéristiques soit chimiques-, soit physiques de la bande. Dans la présente demande, deux bandes présentant une épaisseur différente ou un état de surface différent peuvent être qualifiées de bandes de qualité différente.

Dans un mode de réalisation particulièrement préféré, la machine est une machine de tirage photographique et les bandes alimentées sont des bandes de papier photographiques présentant un état de surface différent ou un grade différent.

Dans certaines utilisations on utilise des quantités de bande d'une qualité déterminée de manière beaucoup plus importante que les quantités des bandes d'autre qualité. Dans ces utilisations, il est avantageux de pouvoir fournir à la machine une bande provenant d'une source externe 30. La source externe peut avantageusement être analogue au magasin décrit dans la demande WO 91/19222. La bande issue de ce magasin est transmise à la machine 11 par l'intermédiaire d'une interface 40. Cette interface peut être du type de celle décrite dans la demande WO 91/20016. Toutefois comme on le verra par la suite d'autres fonctionnalités lui ont été incorporées.

Pour transmettre la bande issue de l'interface 40, la machine comprend un dispositif d'interfaçage 50 agencé de manière à relier la fente de sortie de l'interface 40 à la fente d'entrée 13 de la machine. Le dispositif d'interfaçage délimite une trajectoire de guidage 51.

Comme on le voit sur les Figs 1 et 2, la machine est équipée d'un organe de déplacement 16. Cet organe déplace la bande sortant soit des magasins 21 amovibles, soit du dispositif d'interfaçage 50 vers le poste de collure 14 tout en conservant l'étanchéité à la lumière.

Dans le cas particulier d'une tireuse photographique, la trajectoire doit être étanche à la lumière de manière à ne pas voiler le papier photosensible que l'on déplace à l'intérieur du dispositif d'interfaçage 50.

Suivant l'invention, le dispositif d'interfaçage comprend au moins deux parties 22, 23. Une partie principale 22 qui est agencée de manière à remplacer l'un des chargeurs amovibles 21 et que l'on fixe sur la tourelle 20 de la même manière que les magasins 21. La partie principale 22 délimite une partie de la trajectoire de guidage 51. Avantageusement la zone de la partie principale 22 par où la bande quitte la trajectoire de guidage 51 est agencée de manière analogue à la zone des magasins 21 amovibles par laquelle la bande contenue dans ces magasins est extraite de ces derniers. Cette disposition permet de ne pas modifier le reste de la machine. Cette partie principale sera décrite plus en détail par la suite.

Suivant l'invention, le dispositif d'interfaçage comprend aussi une partie satellite 23. La partie satellite 23 permet de relier la fente de sortie de l'interface 40 à la partie principale 22 et délimite une autre partie de la trajectoire de guidage 51. Comme on le voit sur les Figs 1 et 2, la partie satellite 23 comprend un galet de renvoi 24 et la partie principale 22 comprend un galet de renvoi 25. Les galets de renvoi 24 et 25 sont libres en rotation ce qui évite d'endommager la bande lors de son défilement. La trajectoire de guidage est donc constituée d'une partie pratiquement immobile par rapport à la machine 11 et d'une autre partie susceptible de tourner avec la tourelle 20 lorsqu'on désire changer la qualité de la bande.

Dans le mode de réalisation préféré suivant l'invention, les bandes sont des produits photosensibles. Dans ces conditions, la trajectoire de guidage doit être isolée de la lumière de manière à ne pas voiler le produit photosensible. Pour permettre cette étanchéité à la lumière tout en conservant une trajectoire en au moins deux parties dont l'une est solidaire de la tourelle, la partie satellite 23 est articulée en 60 de manière à basculer entre une première position dans laquelle cette partie satellite coopère avec la partie principale 22 et fournit une trajectoire étanche à la lumière et une seconde position dans laquelle elle est éloignée de la partie principale de manière à ne pas interférer avec le volume délimité par les magasins 21 disposés sur la tourelle lorsque cette dernière tourne pour changer la qualité de la bande. Ce basculement est obtenu au moyen d'un vérin 61 commandé par la logique (non représentée) de la machine.

Nous allons décrire succinctement le principe de fonctionnement de la machine suivant l'invention lors de la phase d'alimentation. Lorsque l'opérateur désire utiliser une bande de grande longueur venant de la source extérieure 30, une commande de la machine lui permet de disposer la partie principale 22 du dispositif d'interfaçage suivant l'invention en position de travail telle que représentée à la Fig. 1. Une fois que la partie principale 22 est en place, le vérin 61 est mis en oeuvre de manière à basculer la partie satellite 23 dans sa première position où cette partie satellite 23 coopère avec la partie principale 22 pour obtenir l'étanchéité à la lumière pour la trajectoire de guidage 51. Ensuite l'opérateur introduit la bande sortant du magasin 30 dans l'interface 40, de la manière décrite dans la demande WO 91/20016, entre le rouleau d'entraînement 42 et son rouleau presseur 41. On remarquera que dans l'interface 40 proposée, on a disposé un autre rouleau d'entraînement 43 qui coopère avec un autre rouleau presseur 44 et dont on verra la fonction ci-après. Une logique de commande (non représentée) associée à l'interface 40 permet d'introduire la bande entre les rouleaux 43 et 44 de mettre en contact le rouleau presseur 44 et le rouleau d'entraînement 43 puis de rabaisser les galets 45 de formation de boucle qui lors de l'amorçage avaient été disposés par la logique de commande de l'interface 40 dans leur position représentée en trait interrompu. Une fois les boucles formées, la bande est alimentée par le rouleau d'entraînement 43 et le rouleau presseur 44 dans la partie satellite 23 puis à la partie principale 22 et enfin à la fente d'entrée 13 de la machine.

Lors de l'alimentation de la bande à partir de la source externe 30 ou magasin externe, le galet de renvoi 25 est éloigné d'un tambour d'avancement 72 comme indiqué par la suite. Un élément de guidage 71 sur lequel est fixé le galet de renvoi 25 permet de dévier la bande de produit photosensible de manière à la diriger vers la fente d'entrée 13 de la machine. Une fois que la bande parvient à la fente d'entrée 13 de la machine 11, son transport est arrété. Le transport de la bande est obtenu par une temporisation déterminée de l'action du rouleau d'entraînement 43. A ce moment, le galet de renvoi 25 et son élément de guidage 71 sont basculés autour de l'articulation 70 de manière à pincer la bande entre le galet de renvoi et le tambour 72 que l'on décrira plus en détail par la suite et qui peut être entraîné en rotation dans un sens ou dans l'autre par l'intermédiaire de la broche 80 de la machine. Ensuite le rouleau presseur 44 est éloigné du rouleau moteur 43 et un embrayage non représenté libère le rouleau 43 qui devient libre en rotation et ne sert que de galet de renvoi. Enfin la bande sortant de la partie principale peut être prise en charge par l'organe de déplacement 16 de la machine.

Il est évident que l'on dispose sur la trajectoire de guidage 51 des capteurs de position raccordés à la logique de commande de l'interface 40 et de la machine 11 de manière à commander et contrôler la progression de la bande de papier. Dans le mode de réalisation préféré on utilise en plus deux capteurs 112, 113 de position disposés au voisinage de deux extrémités de la partie satellite 23 du dispositif d'interfaçage 50.

Lorsque ces opérations ont été réalisées, la machine peut débiter la bande pour réaliser des tirages successifs. Si l'opérateur désire changer la qualité de la bande et utiliser une bande contenue dans l'un des chargeurs amovibles 21, la machine interrompt l'alimentation de la bande provenant de la source externe 30 et au moyen de la cisaille 15 coupe ladite bande. Le rouleau d'entraînement 43 et le rouleau presseur 44 sont remis en contact l'un avec l'autre le galet de renvoi 25 et son élément de guidage 71 sont à nouveau éloignés du tambour 72 et la logique de commande de l'interface et de la machine commande la rotation en marche arrière du rouleau moteur 43 ce qui a pour effet de déplacer vers le bas les galets 45 et de ramener vers l'interface 40 l'extrémité aval de la bande de papier que l'on vient de couper. Le déplacement vers "l'arrière" de la bande de papier n'est interrompu que lorsqu'aucune bande de papier ne se trouve dans la partie principale 22 c'est-à-dire lorsque l'extrémité aval de la bande est située entre les cellules 112 et 113. A ce moment le vérin 61 est mis en oeuvre de manière à basculer la partie satellite 23 dans sa deuxième position, position dans laquelle elle n'interfère pas avec le volume délimité par les chargeurs 21 disposés sur la tourelle 20 lorsque cette dernière est mise en rotation. L'opérateur peut alors disposer celui des magasins 21 choisi en position de travail telle que représentée à la Fig. 2. L'organe de déplacement 16 de la machine est alors mis en oeuvre et prend en charge la bande issue de ce magasin 21 pour l'amener au poste de collure 14 où l'extrémité aval est raccordée à l'extrémité amont de la bande débitée précédemment. Il est évident que le poste de collure n'est pas indispensable si la machine a été conçue différemment par exemple pour prendre en charge des morceaux individuels correspondant au format des images finales.

Lorsque l'opérateur veut utiliser à nouveau la bande provenant de la source externe 30, la machine interrompt la progression de la bande issue d'un magasin 21, coupe cette bande qui est retournée partiellement à l'intérieur du magasin 21 au moyen de l'organe de déplacement 16 qui tourne alors en marche arrière. On dispose alors la partie principale 22 du dispositif d'interfaçage 50 en position de travail telle que représentée à la Fig. 1, puis on excite le vérin 61 de manière à basculer la partie satellite 23 dans sa première position et l'on renvoie, de la manière décrite précédemment, la bande contenue dans cette partie satellite 23 vers la partie principale 22 et vers la fente d'entrée 13 de la machine où cette bande est à nouveau prise en charge par l'organe de déplacement 16 de la machine 11. Il est évident que pendant cette alimentation les galets 45 sont revenus à leur position précédente, position intermédiaire dans laquelle la fonction qu'ils assurent est celle décrite dans la demande WO 91/20016.

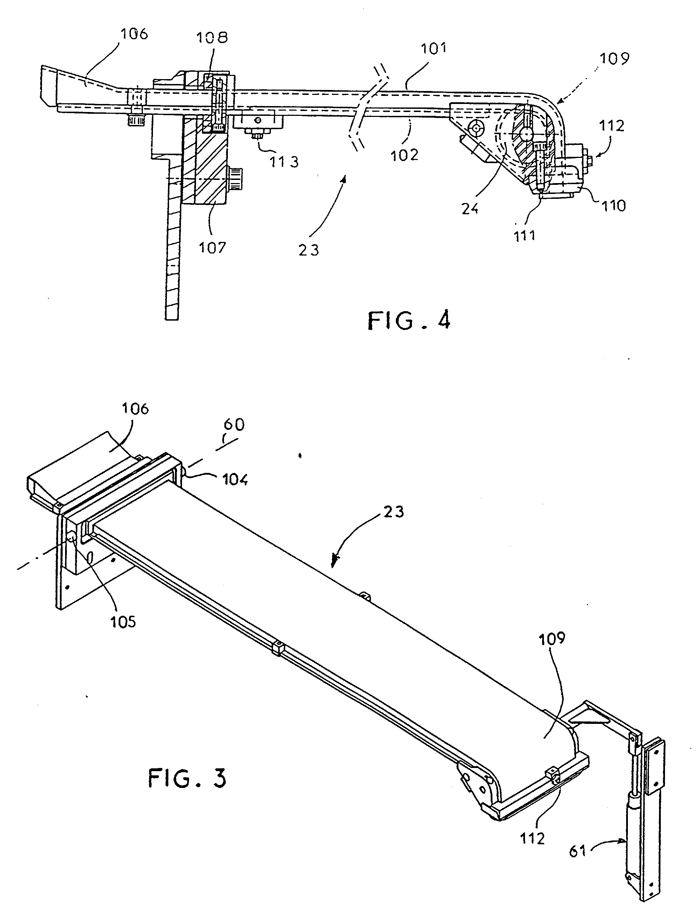

Nous allons décrire maintenant en référence aux Figs 3 à 8, la partie satellite 23 et la partie principale 22 du dispositif d'interfaçage 50. Comme on le voit sur les Figs 3 et 4 la partie satellite 23 est constituée principalement de deux plaques 101, 102 reliées entre elles de manière à définir une partie de la trajectoire de guidage 51. La partie amont 106 de la partie satellite 23 déborde le carter de la machine 11 et pénètre par la fente de sortie de l'interface 40 dans l'intérieur de cette interface. Avantageusement cette partie amont 106 présente une forme évasée de manière à faciliter l'introduction de la bande de papier dans ladite partie satellite 23. La partie satellite 23 est montée sur le carter de la machine par l'intermédiaire de goupilles 104, 105 de manière à permettre son basculement qui est commandé par le vérin 61. Les goupilles sont maintenues par un support 107 fixé sur le carter de la machine.

Pour obtenir l'étanchéité à la lumière on dispose entre le carter de l'interface 40 et le carter de la machine 11 un joint d'étanchéité souple entourant la fente de sortie de l'interface 40. De plus, on dispose un joint élastique 108 maintenu par le support 107 et enserrant étroitement la partie satellite 23. Il est évident que toute autre disposition peut être utilisée pour assurer cette étanchéité à la lumière.

La partie satellite 23 est munie à son extrémité aval 109 d'une paroi arrondie servant à dévier la bande de papier lorsque cette dernière est déplacée par les rouleaux 43, 44 lors de l'alimentation de la bande de papier. De plus cette extrémité 109 est pourvue d'un rouleau de renvoi 24 libre en rotation et permettant de ne pas endommager la surface de la bande lors du transport de cette dernière.

On remarquera aussi que cette extrémité 109 est aussi pourvue d'un embout 110 dont les parois externes sont inclinées et qui présente une lèvre 111 amincie servant à établir l'étanchéité à la lumière lorsque la partie satellite 23 et la partie principale 22 coopèrent.

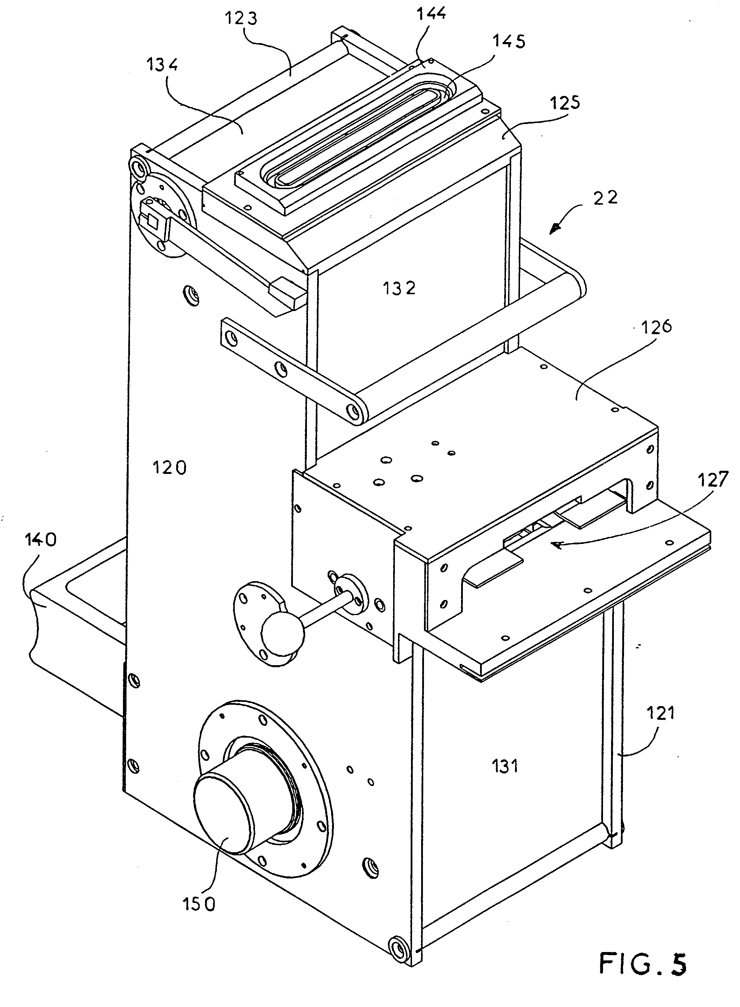

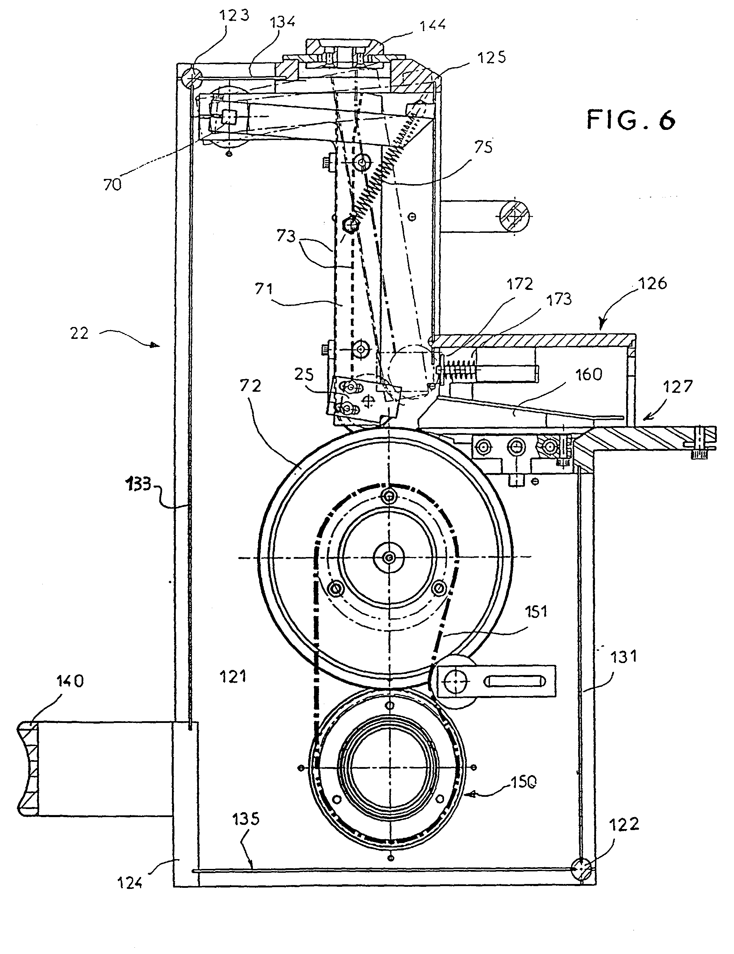

On se référera maintenant aux Figs 5 à 8 pour mieux comprendre la structure de la partie principale 22 du dispositif d'interfaçage 50 utilisé dans l'invention. La partie principale est constituée d'un châssis étanche à la lumière formé par deux plaques latérales 120, 121 solidarisées l'une à l'autre d'une part par des tiges 122, 123 qui comme on le voit sur la Fig. 6 sont pourvues de rainures longitudinales et d'autre part par un support 124, une pièce supérieure 125 et un boîtier 126. Le support 124, la pièce supérieure 125 et le boîtier 126 sont eux aussi pourvus de rainures. Les rainures sont conçues de manière à recevoir des panneaux avant 131, 132 et arrière 133 et des panneaux supérieur 134 et inférieur 135. Les panneaux pénètrent aussi dans des rainures faites dans les plaques latérales 120 et 121. Ce type de montage permet d'assurer l'étanchéité à la lumière tout en évitant les soudures. Il est évident que tout autre type de fixation assurant l'étanchéité à la lumière peut être utilisé.

Avantageusement, la partie principale est réalisée de manière à occuper la place laissée vacante lorsqu'on retire l'un des magasins 21 amovible que l'on fixe habituellement sur la tourelle 20. De plus, il est avantageux que le système de fixation des magasins amovibles soit utilisé pour fixer la partie principale 22. Dans le mode de réalisation représenté aux Figs 5 et 6, le support 124 est muni d'un prolongement 140 qui coopère avec l'arbre 141 de la tourelle 20 de la même manière que certaines parties des magasins amovibles coopèrent avec cet arbre 141. De plus, la partie principale 22 est munie d'un arbre creux 150 qui entoure l'une des broches motrices 80, 81, 82 de la machine. Il est donc aisé d'enfiler les magasins 21 ou la partie principale 22 sur les broches, la rotation étant empêchée par la coopération du prolongement 140 avec l'arbre de la tourelle. Pour simplifier le fonctionnement de la machine il est avantageux que la partie principale soit toujours associée avec le même arbre de la machine. Pour ce faire on dispose, entre la tourelle 20 et la partie principale 22, un détrompeur qui peut prendre la forme d'une goupille (non représentée) coopérant avec un trou correspondant (non représenté) réalisé dans la tourelle 20.

La pièce supérieure 125 est surmontée d'une matrice 144 dont la forme est conçue pour coopérer avec l'embout 110 et assurer l'étanchéité à la lumière. On remarquera que la matrice 144 présente une gorge 145 entourant la fente par laquelle la bande passe et que cette gorge est agencée de manière à recevoir la lèvre 111 de l'embout 110. De cette manière on délimite entre la partie satellite 23 et la partie principale 22 une jonction en forme de V par lequel la lumière ne peut pas passer.

La partie principale comprend un tambour 72 relié à l'arbre 150 par une courroie crantée 151 de manière à pouvoir être entraîné en rotation par l'unité de commande de la machine.

Avantageusement la partie supérieure du tambour 72 est pratiquement au même niveau que le fond du boîtier 126.

Un bras coudé est articulé par une de ses extrémités en 70 et supporte à son autre extrémité le galet de renvoi 25. Comme on le voit sur la Fig. 6 le bras coudé porte-un guide 71 délimitant au moyen de deux parois 73 la trajectoire de guidage 51. L'extrémité de la paroi située au voisinage du galet de renvoi 25 à l'extérieur de ce dernier est légèrement recourbé (Fig. 6). Le bras coudé est sollicité par un ressort 75 de manière à éloigner le galet de renvoi 25 du tambour 72. Dans cette position le bras coudé prend une position représentée en trait interrompu sur la Fig. 6 dans laquelle le bras coudé est pratiquement en butée contre la pièce supérieure 125. Le guide délimité par les parois 73 coïncide donc avec l'ouverture de la matrice 144. De cette manière la bande est guidée après déviation par la paroi arrondie de l'extrémité aval 109 de la partie satellite jusqu'à l'extrémité du bras coudé portant le galet de renvoi 25. Le guide 71 présente à sa partie inférieure une zone légèrement courbée de manière à fléchir la bande, et à la faire pénétrer dans le boîtier 126 où elle glisse sur le fond de ce boîtier puis sort de ce boîtier par une ouverture 127. Comme on le voit sur la Fig. 6, le fond du boîtier 126 se prolonge suffisamment vers le tambour 72 pour que la bande de papier photosensible ne se coince pas entre le tambour 72 et le fond du boîtier 126.

Une fois la bande parvenue à la fente d'entrée 13, le bras coudé est basculé au moyen d'un vérin qui déplace un levier 151 articulé en 70. Le basculement de ce levier 151 déplace le bras coudé de manière à solliciter le galet de renvoi 25 vers le tambour 72. La force exercée par le vérin est suffisante pour surmonter la force exercée par le ressort 75 et appliquer la bande sur le tambour 72 pour que tout déplacement du tambour entraîne la bande. Une fois cette opération terminée le rouleau presseur 44 de l'interface 40 est relevé et un embrayage (non représenté) libère la liaison entre un moteur et le rouleau d'entraînement 43 qui est donc transformé en galet de renvoi. L'interface 40 fonctionne désormais de la manière décrite dans WO 91/20016.

Dans un mode de réalisation avantageux, le dispositif d'interfaçage 50 peut recevoir comme la machine des bandes de diverses largeurs. Toutefois, ceci nécessite un guidage plus précis au niveau de la fente d'entrée de la machine 11. Pour obtenir ce guidage plus précis le boîtier 126 est muni de deux guides latéraux 160 supplémentaires que l'on peut déplacer grâce à un levier de commande 161 débordant l'une des parois du boîtier. Les guides latéraux 160 présentent une forme de "L" de manière à limiter les mouvements latéraux et verticaux de la bande.

Le levier 161 est guidé d'une part par l'ouverture dans la paroi du boîtier permettant son passage et d'autre part par une bride solidaire du fond du boîtier.
Avantageusement, le levier 161 comporte plusieurs gorges de positionnement 163 qui coopèrent avec une bille a ressort 164.

Avantageusement, au moment de l'amorçage de la bande provenant de la source extérieure les guides 160 sont rapprochés l'un de l'autre par rotation autour d'axes respectifs décalés.

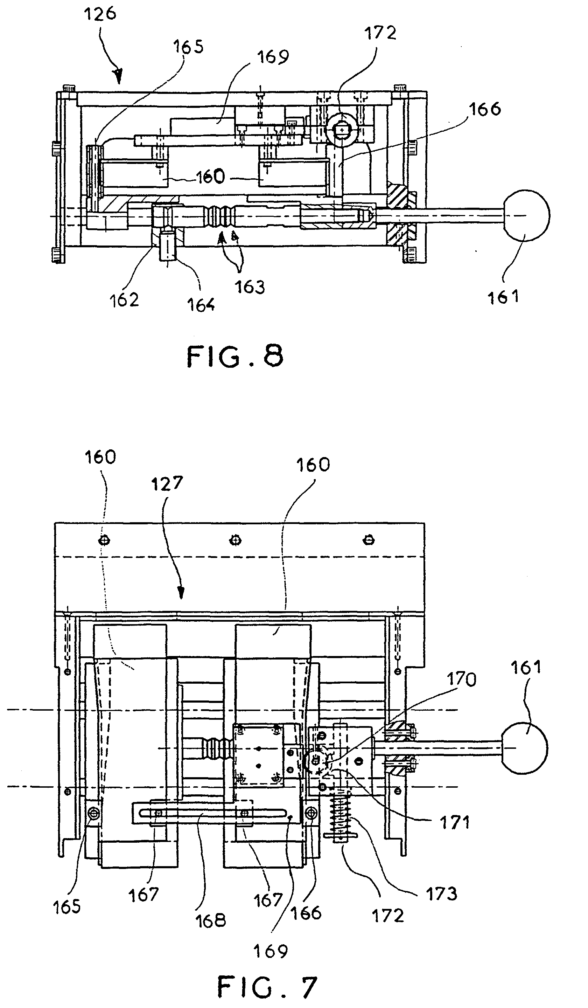

Dans le mode de réalisation représenté aux Figs 7 et 8 l'un des bords de la bande présente une position latérale fixe et sert de référence. L'axe 165 servant d'articulation au guide 160 est donc fixe par rapport au boîtier. L'axe 166 servant d'articulation à l'autre guide latéral 160 est solidaire du levier de commande 161.

Le rapprochement temporaire des extrémités des guides latéraux 160 l'un vers l'autre au moment de l'amorçage est obtenu par l'intermédiaire des broches 167 qui sont solidaires des guides 160 et qui pénétrent dans une rainure 168 que l'on peut déplacer. Dans le mode de réalisation représenté la rainure 168 fait partie d'un ensemble à glissière 169 muni d'une crémaillère venant en prise avec un engrenage 170. L'engrenage 170 est entraîné par une autre crémaillère 171 portée par un coulisseau 172 sollicité au repos par un ressort de compression 173. Au repos les guides latéraux 160 prennent une position dans laquelle leur extrémité aval respective est éloignée l'une de l'autre, par l'action du ressort de compression 173. La distance entre les extrémités avals des deux guides latéraux 160 est supérieure d'environ 3 mm par rapport à la largeur de la bande lorsque ces extrémités sont rapprochées l'une vers l'autre.

Lorsque le dispositif d'interfaçage 50 est en fonctionnement, le bras coudé est dans la position représentée en trait continu sur la Fig. 6 et n'appuie pas sur le coulisseau 172. Le ressort de compression permet alors d'écarter les extrémités avals des guides supplémentaires 160 l'une de l'autre et la distance est supérieure à la largeur de la bande d'environ 20 mm. Lorsque le bras coudé n'est plus basculé par le vérin correspondant le ressort de traction 75 le fait basculer et il vient en contact avec le coulisseau 172 pour le déplacer et former ainsi un couloir de guidage de largeur plus petite.

## Revendications

1. Machine (11) comprenant :
a) une fente d'entrée (13) pour recevoir un matériau (12) en bande et le diriger vers un poste d'utilisation ;
b) un dispositif d'alimentation (10) muni d'une tourelle rotative (20) susceptible de recevoir plusieurs magasins débiteurs (21) amovibles contenant des rouleaux dudit matériau en bande ;
c) un moyen (16) pour entraîner, vers la fente d'entrée, une bande dudit matériau issue d'un magasin débiteur déterminé fixé sur la tourelle rotative; et
d) un moyen (15) pour interrompre l'alimentation de la bande en vue de changer le magasin débiteur utilisé ; machine caractérisée :
i) en ce qu'elle comprend aussi un dispositif d'interfaçage (50) agencé de manière à relier la fente d'entrée à une source (30), extérieure à la tourelle, débitrice de bande ;
ii) en ce que ledit dispositif d'interfaçage comprend un moyen (22, 23) définissant une trajectoire de guidage pour la bande provenant de la source extérieure (30) ; et
iii) en ce que ledit moyen (22, 23) définissant ladite trajectoire de guidage présente une partie (22) solidaire à la tourelle et susceptible de tourner avec elle.

2. Machine selon la revendication 1, dans laquelle la bande (12) est une bande photosensible.

3. Machine selon la revendication 2, dans laquelle ledit moyen (22, 23) du dispositif d'interfaçage (50) comprend un premier moyen (23) pour relier la source externe (30) à ladite partie susceptible de tourner avec la tourelle lorsque cette partie est utilisée, ledit premier moyen étant articulé de manière à basculer entre une première position dans laquelle ce premier moyen fournit une trajectoire étanche à la lumière lors de l'utilisation de la source extérieure (30) débitrice de bande et une seconde position dans laquelle ce premier moyen est situé en dehors du volume délimité par l'ensemble desdits magasins débiteurs lorsque la tourelle tourne.

4. Machine selon l'une quelconque des revendications 1 à 3 dans laquelle le dispositif d'interfaçage (50) comprend des moyens (41, 42) pour déplacer l'extrémité aval de la bande vers la source externe lorsque ledit moyen (15) pour interrompre l'alimentation de la bande est actionné, afin que la partie de la trajectoire de guidage qui tourne avec la tourelle ne contienne plus de bande.

5. Machine selon la revendication 4, caractérisée en ce qu'elle comprend un dispositif de guidage (160) délimitant une trajectoire de largeur prédeterminé lors de l'amorçage de la bande issue d'un magasin débiteur (21) et une trajectoire de largeur supérieure lors de l'utilisation de la bande issue de la source exterieure (30).

6. Procédé pour fournir un produit en bande provenant d'une source externe (30) à une machine (11) munie d'une fente d'entrée et de magasins debiteurs (21) disposés sur une tourelle rotative (20) en vue de disposer les magasins les uns après les autres dans une position où ils peuvent fournir la bande qu'ils contiennent à la machine, procédé caractérisé en ce que l'on relie la sortie de la source externe (30) à la fente d'entrée (13) de la machine par un dispositif d'interfaçage (50) comprenant un moyen (22, 23) définissant une trajectoire dont au moins une partie est solidaire de la tourelle et tourne avec elle.

## Patentansprüche

1. Vorrichtung (11) mit
a) einem Einlaßschlitz (13) zum Aufnehmen eines Materials (12) in Streifenform und zum Führen des Bandstreifens zu einer Station, in der er verwendet wird;
b) einer Zuführeinrichtung (10), die mit einem drehbaren Drehkopf (20) versehen ist, der mehrere entfernbare Zuführbehälter (21) aufnehmen kann, die Rollen des Streifenmaterials enthalten;
c) einem Mittel (16) zum Bewegen eines Materialstreifens, der von einem bestimmten, am Drehkopf befestigten Zuführbehälter kommt, in Richtung des Einlaßschlitzes; und
d) einem Mittel (15) zum Unterbrechen der Steifenzuführung, um den verwendeten Zuführbehälter auszuwechseln;
dadurch gekennzeichnet, daß
i) sie eine Verbindungseinrichtung (50) aufweist, die so angeordnet ist, daß sie den Einlaßschlitz mit einer außerhalb des Drehkopfes gelegenen Streifenzuführquelle (30) verbindet;
ii) die Verbindungseinrichtung (50) Mittel (22, 23) aufweist, die eine Führungsbahn für das von der externen Quelle (30) kommende Streifenmaterial bilden; und
iii) die die Führungsbahn bildenden Mittel (22, 23) ein am Drehkopf befestigtes Teil (22) aufweisen, welches sich mit dem Drehkopf drehen kann.

2. Vorrichtung nach Anspruch 1, dadurch gekennzeichnet, daß der Sreifen (12) ein lichtempfindliches Streifenmaterial ist.

3. Vorrichtung nach Anspruch 2, dadurch gekennzeichnet, daß die Mittel (22, 23) der Verbindungseinrichtung (50) ein erstes Mittel (23) zum Verbinden der externen Quelle (30) mit dem Teil aufweisen, welches sich mit dem Drehknopf drehen kann, wenn das Teil benutzt wird, wobei das erste Mittel so angelenkt ist, daß es zwischen einer ersten Stellung, in der es bei Benutzung der externen Streifenzuführquelle (30) eine lichtdichte Bahn bildet, und einer zweiten Stellung, in der es außerhalb des durch alle Zuführbehälter bei Drehung des Drehkopfes definierten Raums liegt, eine Kippbewegung ausführt.

4. Vorrichtung nach einem der Ansprüche 1 - 3, dadurch gekennzeichnet, daß die Verbindungseinrichtung (50) Mittel (41, 42) aufweist, die das hintere Ende des Streifens in Richtung auf die externe Quelle bewegen, wenn das Mittel (15) zum Unterbrechen der Streifenzuführung betätigt wird, so daß das mit dem Drehknopf rotierende Teil der Führungsbahn kein Streifenmaterial mehr enthält.

5. Vorrichtung nach Anspruch 4, dadurch gekennzeichnet, daß sie eine Führungseinrichtung (160) aufweist, die eine Bahn von vorbestimmter Breite bildet, wenn mit dem aus einem Zuführbehälter kommenden Streifen begonnen wird, und eine Bahn mit normaler Breite, wenn ein aus der externen Quelle kommender Streifen verwendet wird.

6. Verfahren zum Zuführen eines aus einer Quelle (30) kommenden Produktes in Streifenform, wobei sich die Quelle außerhalb einer Vorrichtung (11) befindet, die mit einem Eingangsschlitz und Zuführbehältern (21) ausgestattet ist, welche auf einem drehbaren Drehkopf (20) angeordnet sind und nacheinander in eine Stellung bewegt werden, in der sie das in ihnen enthaltene Streifenmaterial der Vorrichtung (11) zuführen können, dadurch gekennzeichnet, daß der Auslaß der externen Quelle (30) mit dem Einlaßschlitz (13) der Vorrichtung (11) über eine Verbindungseinrichtung (50) verbunden ist, die Mittel (22, 23) aufweisen, welche eine Bahn bilden, von der zumindest ein Teil am Drehkopf befestigt ist und mit ihm rotiert.

## Claims

1. Machine (11) comprising:
a) an inlet slot (13) for receiving a material in strip form (12) and directing it to a station where it is to be used;
b) a feed device (10) provided with a rotary turret (20) able to receive several removable feed magazines (21) containing rolls of said material in strip form;
c) means (16) for driving, towards the inlet slot, a strip of said material coming from a given feed magazine fixed to said rotary turret; and
d) means (15) for interrupting the feed of the strip for the purpose of changing the feed magazine used;
machine characterised:
i) in that it also comprises an interfacing device (50) arranged so as to connect the inlet slot to a strip feed source (30) external to said turret;
ii) in that said interfacing device (50) comprises means (22, 23) for defining a guide path for the strip coming from the external source (30); and
iii) in that said means (22, 23) for defining said guide path has a part (22) fixed to said turret, which part is able to rotate with it.

2. Machine according to Claim 1, in which the strip (12) is a photosensitive strip.

3. Machine according to Claim 2, in which said means (22, 23) of the interfacing device (50) comprises a first means (23) for connecting the external source (30) to the part which is able to rotate with the turret when this part is used, said first means being articulated so as to tilt between a first position in which this first means provides a lightproof path during the use of the external strip feed source (30) and a second position in which this first means is situated outside the space defined by all the feed magazines when the turret rotates.

4. Machine according to any one of Claims 1 to 3, in which the interfacing device (50) comprises means (41, 42) for moving the downstream end of the strip towards the external source when said means (15) for interrupting the feed of the strip is actuated, so that the part of the guide path which rotates with the turret no longer contains any strip.

5. Machine according to Claim 4, characterised in that it comprises a guide device (160) defining a path of predetermined width when the strip coming out from a feed magazine is started off and a path of normal width when a strip coming from the external source is used.

6. Method for supplying a product in strip form coming from a source (30) external to a machine (11) fitted with an entrance slot and feed magazines (21) disposed on a rotary turret (20) for the purpose of disposing the magazines one after another in a position in which they are able to supply the strip which they contain to the machine, method characterised in that the discharge from the external source (30) is connected to the entrance feed slot (13) of the machine by an interfacing device (50) comprising means (22, 23) defining a path, at least one part of which is fixed to the turret and rotates with it.
